# EUROPEAN PATENT SPECIFICATION

(11) **EP 1 672 554 B1**
(45) Date of publication and mention of the grant of the patent: **12.02.2014**
(21) Application number: 05112258.8
(22) Date of filing: 15.12.2005
(51) Int. Cl.: G06F 21/14

(54) **A method for blocking unauthorized use of a software application**
Verfahren zur Blockierung der unautorisierten Benutzung einer Softwareanwendung
Procédé de blocage d une utilisation non autorisée d une application logicielle

(30) Priority: 20.12.2004 US 636885 P; 06.04.2005 US 99581
(43) Date of publication of application: 21.06.2006
(73) Proprietor: SafeNet Data Security (Israel) Ltd., 49511 Petach Tikva (IL)
(72) Inventor: Zunke, Michael, 82229, Seefeld (DE); Margalit, Yanki, 52223, Ramat Gan (IL); Margalit, Dany, 52223, Ramat Gan (IL)
(74) Representative: Romano, Giuseppe

(56) References cited:
- WO-A-99/13613
- WO-A2-97/45780
- US-A1- 2003 074 577
- US-A1- 2003 190 043
- US-B1- 6 237 137
- US-B1- 6 769 058
- 'WIBU-Key User's Guide' page 12-14,162-164, XP002139265

## Description

### Field of the Invention

The present invention relates to the field of protecting software from piracy using a key device. More particularly, the invention relates to a method for blocking unauthorized use of a software application protected by a key device.

### Background of the Invention

The term "software piracy" refers herein to illegal copying, distribution, or use of software. One solution for stopping software piracy is the HASP™ , manufactured by Aladdin Knowledge Systems Ltd. It is a family of products for protecting software applications from piracy and also for Digital Rights Management (DRM). The HASP family currently includes the following products:
- HASP-HL™, which is a hardware-based licensing and software protection system;
- Privilege ™, which is a software-based licensing, software protection and software distribution system;
- Privilege Trialware Toolkit, for creating secure, controlled software trialware; and
- HASP DocSeal ™, which is a hardware-based system for protection of intellectual property and sensitive information in HTML files.

For example, the HASP-HL™ is distributed in the form factor of a token to be inserted to the USB port and the like (e.g. parallel port) of a computer. It is a hardware-based encryption engine which is used for encrypting and decrypting data for software protection. During runtime the HASP-HL™ receives encrypted strings from the protected application and decrypts them in a way that cannot be imitated. The decrypted data that is returned from the HASP-HL™ is employed in the protected application so that it affects the mode in which the program executes: it may load and run, it may execute only certain components, or it may not execute at all. The on-chip encryption engine of HASP employs a 128-bit AES Encryption Algorithm, Universal API, single license capacity, cross-platfonn USB, and more.

Other examples of prior art solutions to the problem of preventing unauthorized use of software include US Patent 6,237, 137 to Beelitz (hereinafter denoted as "Beelitz"; and International Application WO 99/13613 of Nardone, et al. (hereinafter denoted as "Nardone"). Beelitz discloses a method of detecting that a software application is being run under a software debugger program (an unauthorized use of the software); and taking defensive action (such as aborting the execution of the application) in the event that such unauthorized use is detected. In the Beelitz method, the detecting and defensive action is done by the software application itself. A limitation of the Beelitz method, however, is that it is possible to execute the software application under a hardware debugging system in such a manner that the software application is incapable of detecting the unauthorized use.
Nardone discloses apparatus, such as a player for protected media content, which comprises a user-inaccessible section (and is thus tamper resistant) as well as a section that is accessible to a user (and is thus susceptible to attack). In Nardone's system, the tamper resistant section monitors the operation of a software application in the non-tamper resistant section and can detect attempts to attack the application and take actions to thwart the unauthorized use of the software application. A limitation of Nardone's system is that the detecting and defensive action must be performed by a tamper resistant section of the same module in which the software application is running, and cannot be used to protect a software application that is external to the apparatus.

Us Patent Application US2003/0190043 discloses an external apparatus for decrypting parts of the software code using a secret key.

Despite of the endless attempts to prevent software hacking, hackers still succeed to break the protection shield of software.

Therefore, it is an object of the present invention to provide a method for blocking unauthorized use of software application.

Other objects and advantages of the invention will become apparent as the description proceeds.

### Summary of the Invention

The present invention is directed to a method for preventing unauthorized use of a software application which is protected by a key device, the method comprising the steps of: testing the application for unauthorized use; if the testing finds the unauthorized use of the application: indicating the unauthorized use of the application and blocking the key device.

According to one embodiment of the invention, indicating unauthorized use of the application may be carried out by: upon invoking an operation of the software application (e.g. executing a software application, executing the software application, executing a process, performing a task, performing a function, and so forth), setting a flag; upon terminating the operation, clearing the flag; upon re-invoking the operation, if the flag is set, indicating that the software application has been debugged; thereby indicating unauthorized use of the software application.

According to another embodiment of the invention, indicating unauthorized use of the application is carried out by: measuring the time of perfonning an operation by the software application, e.g. executing a process, performing a task, performing a function; indicating unauthorized use of the software application if the time exceeds a threshold.

Blocking the key device may be carried out by amending a behavior of the key device, thereby allowing indicating unauthorized use if the behavior of the key device is different than expected. Blocking the key device may also be carried out by erasing data of the key device.

According to one embodiment of the invention, indicating unauthorized use of the application is carried out by: obtaining an integrity indicator of the original form of one or more components of the software application; obtaining an integrity indicator of the current form of the one or more components of the software application; if the integrity indicator of the original form corresponds to the integrity indicator of the current form, then indicating that the one or more components have not been tampered with, otherwise indicating that the one or more files have been tampered with.

The method may further comprise: upon blocking the key device, and automatically unblocking the key device after a time period (i.e. upon indicating unauthorized use of the key device, suspending the key device for a time period).

According to one embodiment of the invention, the suspension time period is increased each time an unauthorized use is indicated. Furthermore, the suspension time period may be decreased each time an authorized use is indicated. Furthermore, the suspension time can be decreased or even canceled upon indicating a false alarm.

According to a preferred embodiment of the invention, indicating the unauthorized use of the application comprises: upon starting a first process that takes a first time period, activating a second process on the key device, the second process blocks the key device after a second time period during which the first process should come to its end; upon ending the first process, aborting the second process; thereby preventing false alarms of the indicating unauthorized use.

Reference numbers employed in the above-mentioned drawings are included within the appended claims in parentheses as an aid to understanding the claims. These reference signs should not however be seen as limiting the extent of the matter protected by the claims; their sole function is to make claims easier to understand.

### Brief Description of the Drawings

The present invention may be better understood in conjunction with the following figures:
Figs. 1a, 1b and 1c schematically illustrate protection shields, according to the prior art.
Fig. 2 is a high level flowchart of a method for blocking unauthorized use of a key device-protected software application, according to a preferred embodiment of the invention.
Fig. 3 is a flowchart of a method for indicating if a software application has been debugged, according to one embodiment of the invention.
Fig. 4 is a flowchart of a method for indicating if a software application is being debugged, according to one embodiment of the invention.
Fig. 5 schematically illustrates a method for indicating if a file has been amended, according to a preferred embodiment of the invention.
Fig. 6 schematically illustrates a method for preventing false alarms, according to a preferred embodiment of the invention.
Fig. 7 is a flowchart of the method for blocking unauthorized use of a key device-protected software application, according to a further embodiment of the invention.
Fig. 8 is a high level flowchart of a method for blocking unauthorized use of a key device-protected software application, according to another preferred embodiment of the invention.
Fig. 9 is a high level flowchart of a method for blocking unauthorized use of a key device-protected software application, according to another preferred embodiment of the invention.

### Detailed Description of Preferred Embodiments

The term Protection Shield refers herein to software and/or hardware part(s) employed by a software application for preventing unauthorized use of the application. A protection shield can be added to an application during its development, or to the distributed version of the application.

The term "key device" refers herein to a part of a protection shield of a software application which is external to the software application, and operates in a protected environment, in order to be out of the reach of a hacker.

For example, a key device may be in a form factor of a token. This way it provides hardware protection to the software application. The HASP-HL ™ which is manufactured by Aladdin Knowledge Systems Ltd. is a key device in a form factor of a token.

A key device may also be in a form factor of software which operates on a different host than the host which executes the software, and is accessible to the protected software application via wired or wireless means. A key device may also be accessible over a network, whether it is a local area network or a wide area network such as the Internet, as described in the application for patent of the same applicant, identified as Attorney's docket No. 1410. The NetHASP™ which is manufactured by the same applicant Aladdin Knowledge Systems Ltd. is also a key device. The protected environment in this case is the fact that the key device is out of the reach of a hacker, since it resides on a remote location.

Furthermore, a key device may be also in a form factor of a software application executed on the same host as the protected software application. In this case the key device itself can be protected by a protection shield, i.e. to operate in a protected environment. Microsoft NGSCB (New-Generation Secure Computing Base) is an example of a protected environment.

Typically a key device stores a key which is used for ciphering and/or identification with regard to the protected software application. It can also store a license terms to the protected software application, etc.

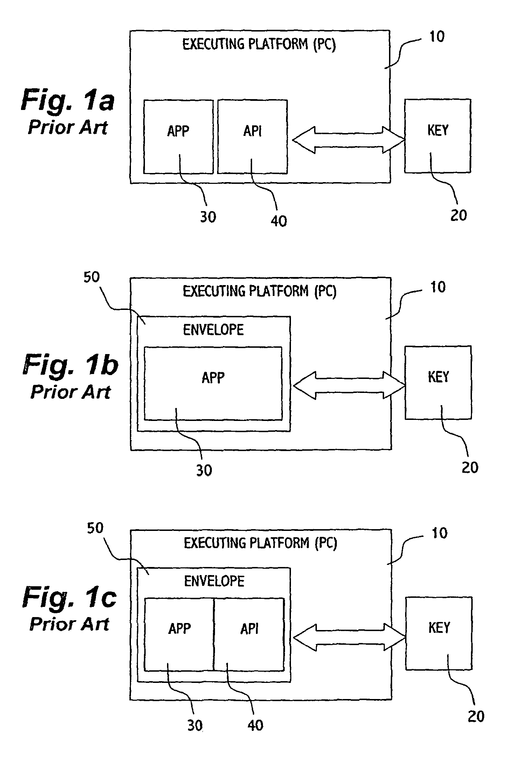

Fig. 1a schematically illustrates a protection shield, according to the prior art. A software application 30 is executed on a computer 10. The software application 30 is protected by a protection shield, which comprises the key device 20 and a protection module 40, which is an executable code that can be invoked by the software application 30, such as in a Application Program Interface (API).

Fig. 1b schematically illustrates another protection shield, according to the prior art. Instead of the API 40, the application 30 is protected by the Envelope 50. A typical example of an envelope is the HASP-HL Envelope.

The HASP-HL Envelope secures an application by adding a "protective shield". The shield is composed of a protection code, which is responsible for binding the application to the key device, encrypting the application file(s), managing and tracking the licensing information stored in the key device and introducing numerous piracy obstacles. When the application is launched, the Envelope sends a query to the HASP-HL key device to validate that it is connected. If the correct HASP-HL is connected to the computer the Envelope uses the HASP-HL encryption engine to decrypt further parts of the application (previously encrypted by the developer). If the HASP-HL key device is not connected, the application cannot execute.

Fig. 1c schematically illustrates another protection shield, according to the prior art. According to this embodiment the envelope 50 protects not only the application, but also the API.

There are many methods for breaking a protection shield, but the most common methods are:
- Breaking the key device: Revealing its hardware structure and operation, and obtaining the content of its memory.
- Breaking the communication protocol between the protected software and the key device: Revealing the content exchanged between the key device and the software.
- Breaking the software application: Amending the software to interact with a dummy key device instead of with the real key device, amending the software to bypass the calls to the key device. A dummy key device can be an external executable which simulates the key device, or even a part which is added to the software.

Breaking the protection shield of a software application is typically carried out as follows: The attacker gets a legitimate copy of the protected program and a corresponding key device. Usually he uses a debugger or even a hardware supported debugger (like Soft-ICE, or an in-circuit-emulator) for executing the protected software in a single step mode or set arbitrary breakpoints. Referring to the HASP-HL, breaking the protection shield is almost impossible if the key device is not connected to the computer that executes the software. This is because some parts of the software are encrypted with a secret key stored within the key device.

By executing the software application step by step, the attacker tries to figure out the nature of the calls of the protected software to the key device and the returned values thereof. The removal of the protection shield is carried out by replacing the call commands of the software to the key device with a code provided by the attacker, which bypasses the calls or provides the values returned by the key device. This is carried out in a plurality of execution sessions, in each one of which the executable part of the protected software is amended a bit. In the majority of the cases the attacker terminates the execution of the software, and restarts it again. Thus, in a typical debugging session for breaking a software application, usually the debugged software does not terminate normally.

During the debugging process, the attacker sets break points into which the debugged software stops its execution, and allows the attacker to view the code, get the values of the variables, change the code, etc. As a result the debugged software stops its processing for at least several seconds on each break point, and continues running after activating the "Continue" command of the debugger by the attacker.

Since debugging is often used for breaking a protection shield, it is common to add to a protection shield tools for preventing debugging of the protected software application. Two methods are used in the prior art for blocking a debugger: Obfuscating and Interrupt Vector Deceiving. For example, US Patent 7,065,652 of the same applicant presents a method which confuses a disassembler to produce results that are not an accurate representation of the original assembly code. The other method for blocking a debugger is by identifying which interrupt is employed by the debugger, and setting other values into its vector, i.e. causing the interrupt employed by the debugger to execute a different code.

Since protection shields are directed also to prevent debugging the software application they protect, the term "unauthorized use of a software application" refers herein to preventing debugging the application as well as to preventing of software piracy, and removing its protection shield.

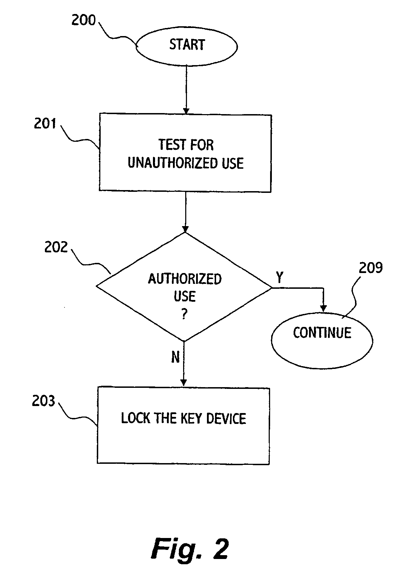

Fig. 2 is a high level flowchart of a method for blocking unauthorized use of a key device-protected software application, according to a preferred embodiment of the invention.

On block 200, the process starts. It should be noted that the process can start before, during, after or upon executing the software application.

On block 201, the authorization to use the application is tested. It should be noted that in the context of the present invention debugging the software application is also considered as unauthorized use.

From block 202, if the test(s) carried out on block 201 indicate that the use of the software application is not authorized then the flow continues with block 203, where the key device which is used in the protection shield gets blocked. blocking a key device may result with abortion of the software application, limiting its use, etc. If the test(s) carried out on block 201 indicate authorized use of the software application, the execution of the software application continues, as indicated in block 209.

### Indicating unauthorized use of the software application

As mentioned above, debugging a software application is also considered as unauthorized use. The software tools enable to indicate if a software application is executed in a debug mode or in a regular mode. Alternatively or additionally, the following methods can be used for indicating if a software application is or has been debugged:

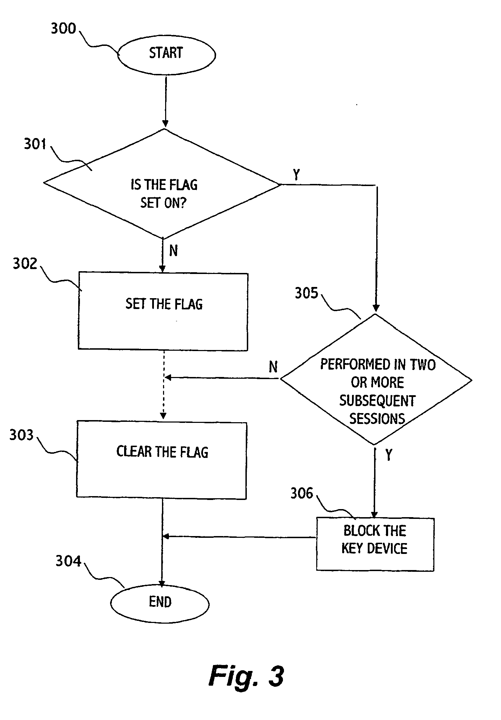

Fig. 3 is a flowchart of a method for indicating if a software application has been debugged, according to one embodiment of the invention. The method uses a flag for indicating normal or abnormal termination (i.e. abortion) of the application. More specifically, abortion of a program can be from the following reasons: (a) the program has been debugged; (b) the power has been dropped off during the execution of the program; and (c) a false alarm. By setting the flag upon starting the program, and clearing the flag upon normally tenninating the program, on the next time the program starts if the flag is on, than it indicates that the program has not terminated its previous execution in a normal way.

At block 300 the software application starts.

From block 301, if the flag off, than the flow continues with block 302, where the flag is set on. However, if the flag is set on, then the execution of the software application has been aborted at the previous time the program was executed, which may indicate that an attempt to debug the software application has been occurred, or that the power has been dropped during the last execution session. In this case flow continues with block 305.

From block 305, if block 305 is performed in two or more subsequent execution sessions, than there is a reasonable evidence that the software application has been debugged rather than the power has been dropped, and the flow continues with block 306, where the key device gets blocked.

At block 303, which takes place at a normal termination (i.e. not abortion) of the software, the flag is cleared.

On block 304 the application terminates.

Preferably the flag is embodied in a non-volatile memory since two subsequent executions may occur after the power has been turned off, however a volatile memory also can be implemented. Moreover, the memory may be a part of the key device, a part of the host, a registry entry, a disk storage, etc., but using the memory of the key device is preferable since it is more secure.

According to one embodiment of the invention the memory is used as a counter. In this case: when the program ends, i.e. normal termination, the memory is cleared; when the program starts, the counter is increased, e.g. by one, and if the value of the counter is greater than a predetermined number N, it means that N subsequent times the program has not terminated normally. Thus, if N is for example 5, probably it is not due to a false alarm, but due to debugging attempts.

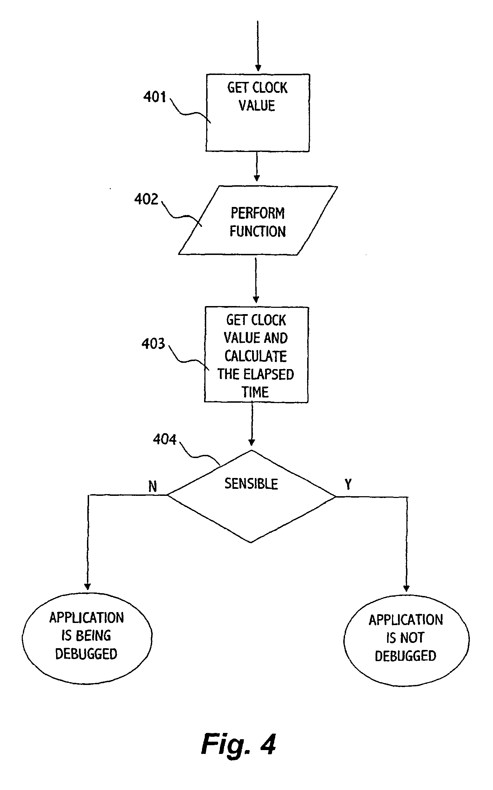

Fig. 4 is a flowchart of a method for indicating if a software application is being debugged, according to one embodiment of the invention. The method measures the time it takes to perform an operation (process, function, etc.) on the host computer, and if it takes more time than expected, than it is usually because someone is debugging the application. Typically the method is carried out by the protection shield on the host computer. The clock may be the computer's clock, however by employing the key device's clock a better security level is achieved, since the user may set the computer's clock, however the key device's clock is out of is reach.

At block 401, upon starting an operation, the current time is sampled from a clock device, preferably the clock of the key device.

At block 402, the operation is performed.

At block 403, upon terminating the operation, the time is sampled again from the clock, and the time the operation has been active is calculated.

From block 404, if the time that takes the operation to be performed is greater than the reasonable time to perform the operation, than it indicates that the software application is debugged. For example, if performing a certain operation, such as reading from the hard disk, takes for example more than one minute, it is reasonable that the software application is being debugged.

According to another embodiment of the invention, detecting that a software application is being debugged can be carried out by unexpected response in a challenge / response or client / server communication session between a software application and a corresponding key device, or an unexpected delay thereof. For example, the key device sends a request to the protection envelope, and the protection envelope doesn't respond during a certain time period, it is reasonable that the application is being debugged. Of course, if the response is not as expected (e.g. an unexpected order of commands from the protection shield or the key device, or an unexpected one-time password), then it also may indicate unauthorized use.

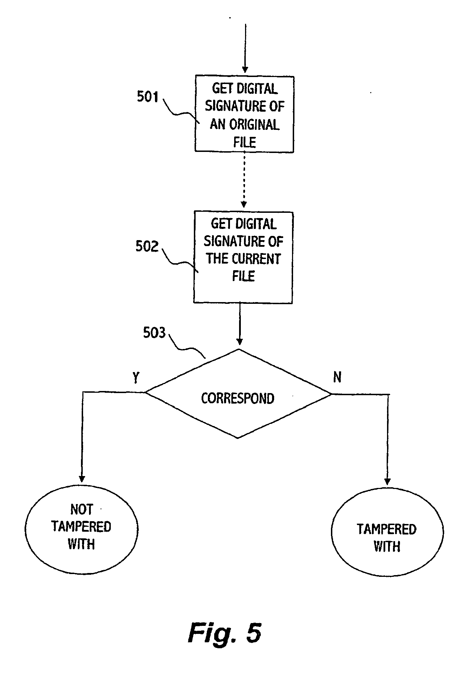

Typically, after a hacker removes the protection shield form a software application, he stores the amended files in their new form. Fig. 5 schematically illustrates a method for indicating if a file has been amended, according to a preferred embodiment of the invention.

At block 501, the digital signature of the original file is calculated. Preferably this is carried out at the manufacturer site. Preferably the digital signature is stored in the memory of the key device, but also can be stored elsewhere.

At block 502, the digital signature of the current form of the file is calculated. This can be done, for example, during the execution of the software application that the file belongs to, and can be carried out by the key device, by the protection shield, etc.

At block 503, if the digital signature of the current form of the file corresponds to the digital signature of the original form of the file, than the file has not been tampered with, otherwise the file has been tampered with.

Of course a digital signature is merely an example, and other indicators can be employed for indicating that the file has not been tampered with, such as checksum and hash. These indicators are referred herein as Integrity Indicators. Moreover, a file is merely an example, and other software components may also be used for this purpose, such as a module of the software that is loaded in a memory of the executing platform of the application.

### Blocking a key device

One point that distinguishes the present invention from the prior art is that according to the present invention the key device gets blocked whenever an unauthorized use of the software application is indicated, in contrast to the prior art where the application aborts its execution or restricts some of its functionality.

According to a preferred embodiment of the present invention, blocking a key device is carried out by setting a flag. When the flag is on, some functionality of the key device is not performed, such as encryption and decryption. According to one embodiment of the invention, data stored on the key device is erased, e.g. a private key which is used for cryptographic purpose. According to another embodiment of the invention, the behavior of the key device is changed. An "abnormal" behavior can be indicated by the application or envelope as an attempt to break the protection shield, however from the hacker's point of view it looks like a "normal" behavior of the key device, and therefore mislead him to believe that his attempts to break the protection shield have succeeded.

### Reducing the number of false alarms

False alarms may be caused by power failure, hardware failure or computer crash, however this happens very rarely because the operations of the protection shield typically takes only a few seconds, and the chances that this will happen during its execution is very poor. Nevertheless, it is the interest of a manufacturer to prevent false alarms as much as possible.

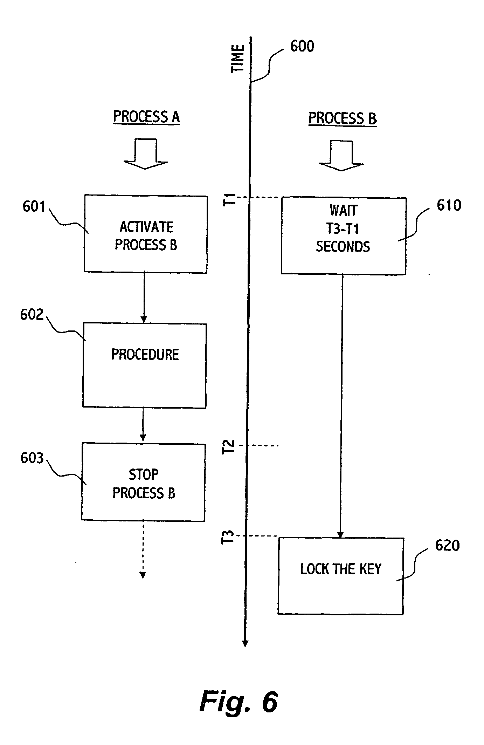

Fig. 6 schematically illustrates a method for preventing false alarms, according to a preferred embodiment of the invention.

The method employs two processes: Process A and Process B. Process A may be carried out by the computer or by the key device, while Process B is carried out only by the key device. Three points are marked on the time axis 600: T1, which is the time block 601 starts; T2, which is the time block 602 ends, i.e. the time block 603 starts; and T3, which is the time block 620 starts. T2 is greater than T1, and T3 is greater than T2.

On a normal operation, i.e. when no debugging is carried out, block 603 is performed before block 620 starts.

On a debug session block 602 takes more time than expected, and therefore block 620 is performed before block 603, which results with blocking the key device. However, in case of a false alarms, e.g. when the power drops, block 620 will not be performed, i.e. the key device will not get blocked.

It should be noted that since Process B is carried out by the key device rather than the computer, and since a hacker cannot debug the key device, this method for distinguishing between false alarms and unauthorized use is secure.

### Unblocking a blocked key device

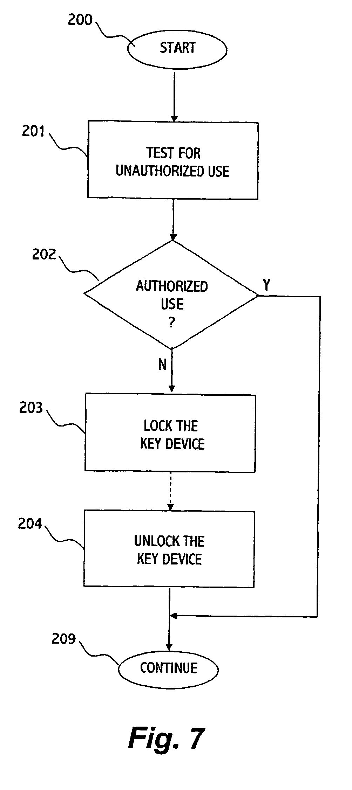

In order to spare inconvenience from a user, according to one embodiment of the invention a key device can be unblocked remotely. In the rare cases where a key device was blocked because of a false-positive alarm, the user may call the software vendor assuming the vendor is able to remotely unblock the key device. This is illustrated in Fig. 7, which is a flowchart of the method of Fig. 2, further comprising unblocking the key device on step 204.

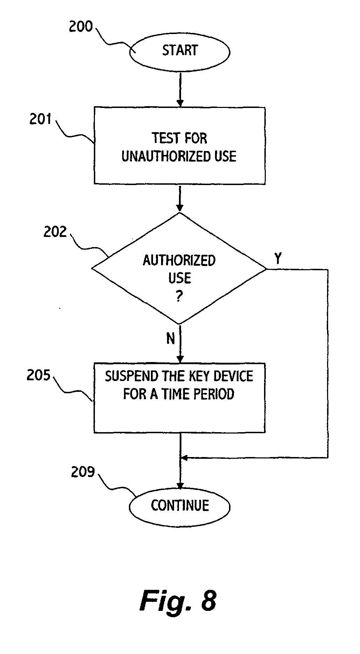

Fig. 8 is a high level flowchart of a method for blocking unauthorized use of a key device-protected software application, according to another preferred embodiment of the invention. According to this embodiment, instead of blocking and unblocking a key device as in Figs. 2 and 7, the key device gets suspended (i.e. temporary blocked) in step 205 for a time period, e.g. 10 minutes, one hour, etc. This way the number of attempts during a time unit to amend the protected software application decreases tremendously. Implementing this solution can be, for example, by counting the CPU clock ticks of the key device (e.g. when it is connected to the USB port). In order to remember the disabled state across a power cycle this state may be stored in non volatile memory. According to one embodiment of the invention, the number of times that unblocking a blocked key device is allowed to do during a time period (e.g. 24 hours) is restricted, e.g. to 5 times. The suspension can be carried out by an internal mechanism of the key device, e.g. a clock and execution code, and/or by an external mechanism, such as the envelope. Of course the internal mechanism is more secure.

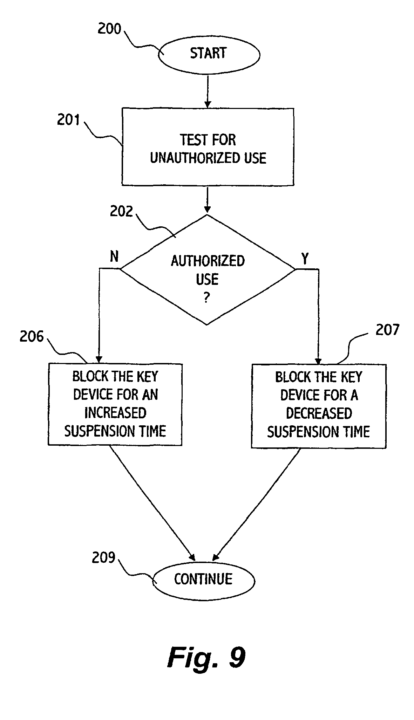

Fig. 9 is a high level flowchart of a method for blocking unauthorized use of a key device-protected software application, according to another preferred embodiment of the invention. According to this embodiment of the invention, each time a key device gets suspended, the suspension time increases on block 206. The increment may be constant, linear, exponential, etc.

Because suspensions caused by false alarms are rare, by using the method of Fig. 9 the inconvenience thereof to a legitimate user is minor, however since a hacker needs to execute the software application a lot of times, the increasing suspension time becomes a meaningful obstacle to him. Using this method the initial period can be chosen so small that it will not be noticed on occasional false alarms. According to one embodiment of the invention, each time that an authorized use is indicated, the suspension time is decreased, as described in block 207.

According to one embodiment of the invention, if a false alarm has been indicated, then the suspension time is decreased or even canceled. For example, if the key device was not used during one day after an event of unauthorized use, it can indicate that the previous indication of unauthorized use was a false alarm (since a hacker executes the application a plurality of times).

Of course that other policy may be implemented. For example, if for one day no attacks have been indicated, the next time an unauthorized use is indicated, the suspension time is decreased. Or, for example, if the key device has been blocked more than N times during a time period, the key device gets blocked such that only the intervention of the manufacturer of the software /key device or of an object behalf of them can unblock the key device.

It should be noted that the fact that a key device can be unblocked without the intervention of its manufacturer or vendor is very convenient to both, the user and the manufacturer / vendor, and therefore implementing this method provides a commercial benefit.

It should also be noted that the fact that hacking attempts may result in a "penalty" (e.g. suspension of the legal copy of the software) is actually a threat to a legal user not to try to hack the protection shield, and therefore it results also in a commercial benefit.

Those skilled in the art will appreciate that the invention can be embodied by other forms and ways, without losing the scope of the invention. The embodiments described herein should be considered as illustrative and not restrictive.

## Claims

1. A method for preventing unauthorized use of a software application (30) which executes on a computer (10) and is protected by a hardware key device (20) having a form factor of a token, wherein the key device (20) is external to the software application (30) and external to the computer (10), the method comprising:
(a) during runtime of the software application:
(i) receiving encrypted strings, from the software application (30), by the hardware key device (20) having the token form factor that is external to the software application (30) and is external to the computer (10);
(ii) decrypting the received encrypted strings to generate decrypted data
(iii) returning the decrypted data from the hardware key device (2) to the software application (30);
(b) testing (201) the software application (30) for unauthorized use; and
(c) if said testing (201) finds said unauthorized use of the software application (30):
(i) indicating said unauthorized use of the software application (30); and
(ii) preventing use of the software application (30);
**characterised in that**:
(i) said preventing use of the software application (30) is by blocking (306) the key device (20) such that said decrypting is not performed;
(ii) the method further includes:
(d) subsequent to said blocking (306) of the key device (20), automatically unblocking (204) the key device (20) after a predetermined time period is over,
wherein:
(A) the time period is increased upon indicating unauthorized use of the hardware key device (20); and/or
(B) the time period is decreased upon indicating authorized use of the key hardware device (20).

2. A method according to claim 1, wherein said indicating unauthorized use of the software application (30) comprises:
upon invoking an operation related to the software application (30), setting (302) a flag indicating execution of said operation;
upon terminating said operation, clearing (303) said flag;
upon re-invoking said operation, if said flag is set, indicating that the software application (30) has been used in an unauthorized manner.

3. A method according to claim 2, wherein said invoking of said operation is selected from the group consisting of: executing a software application (30) other than the software application (30); executing the software application (30); executing a process; performing a task; and performing a function.

4. A method according to claim 2, wherein said flag is implemented in a non-volatile memory.

5. A method according to claim 1, wherein said indicating unauthorized use of the software application (30) comprises indicating unexpected behavior of the software application (30) or unexpected behavior of the key device (20).

6. A method according to claim 1, wherein said indicating unauthorized use of the software application (30) comprises:
measuring (403) a time or performing an operation by the software application (30); and
indicating unauthorized use of the software application (30) if said time exceeds a threshold indicating a reasonable time for said performing.

7. A method according to claim 6, wherein said performing of said operation is selected from the group consisting of: executing a process; performing a task; and performing a function.

8. A method according to claim 1, wherein said blocking (306) the key device (20) is selected from the group consisting of: disabling at least some functionality of said the device; erasing data within the key device (20); and amending a behavior of the key device (20).

9. A method according to claim 1, wherein said indicating unauthorized use of the software application (30) comprises:
obtaining an integrity indicator of an original form of one or more components of the software application (30);
obtaining an integrity indicator of a current form of said one or more components of the software application (30); and
if said integrity indicator of said original form corresponds to said integrity indicator of said current form, then indicating that said one or more components have not been tampered with, otherwise indicating that said one or more components have been tampered with.

10. A method according to claim 1, further comprising: subsequent to said blocking (306) of the key device (20), remotely unblocking (204) the key device (20) by an authorized person.

11. A method according to claim 1, wherein said time period is altered upon indicating a false alarm, and wherein said altering is one of increasing (206) said time period and decreasing (207) said time period.

12. A method according to claim 1, wherein said indicating unauthorized use of the software application (30) comprises:
upon starting a first process, activating (601) a second process on the key device (20), wherein said second process blocks the key device (20) after sufficient time (610) has elapsed for said first process to have finished; and
upon ending said first process before said sufficient time (610) has elapsed, aborting (603) said second process, thereby preventing false alarms of said indicating unauthorized use.

## Patentansprüche

1. Verfahren zur Verhinderung einer unerlaubten Verwendung einer Software-Anwendung (30), welche auf einem Computer (10) läuft und welche von einer Hardware-Schlüsselvorrichtung (20) geschützt wird, welche einen Formfaktor eines Tokens aufweist, wobei die Schlüsselvorrichtung (20) außerhalb der Software-Anwendung (30) und außerhalb des Computers (10) angeordnet ist, wobei das Verfahren die folgenden Schritte aufweist:
(a) während der Laufzeit der Software-Anwendung:
(i) Empfang von verschlüsselten Zeichenfolgen von der Software-Anwendung (30) durch die denToken-Formfaktor aufweisende Hardware-Schlüsselvorrichtung (20), welche außerhalb der Software-Anwendung (30) und außerhalb des Computers (10) angeordnet ist;
(ii) Entschlüsseln der empfangenen Zeichenfolge zur Erzeugung entschlüsselter Daten;
(iii) Zurücksenden der entschlüsselten Daten von der Hardware-Schlüsselvorrichtung (20) an die Software-Anwendung (30);
(b) Prüfen (201) der Software-Anwendung (30) auf eine unerlaubte Verwendung; und
(c) falls die Prüfung (201) die unerlaubte Verwendung der Software-Anwendung ergibt:
(i) Anzeigen der unerlaubten Verwendung der Software-Anwendung (30); und
(ii) Verhindern einer Verwendung der Software-Anwendung (30);
**dadurch gekennzeichnet, dass**:
(i) die Verhinderung der Verwendung der Software-Anwendung (30) dadurch erfolgt, dass die Schlüsselvorrichtung (20) derart blockiert wird (306), dass die Entschlüsselung nicht ausgeführt wird;
(ii) das Verfahren des Weiteren die folgenden Schritte aufweist:
d) im Anschluss an die Blockierung bzw. Sperrung (306) der Schlüsselvorrichtung (20), automatische Freigabe bzw. Entsperrung (204) der Schlüsselvorrichtung (20) nach Ablauf einer vorgegebenen Zeitdauer,
wobei:
(A) die Zeitperiode bei Anzeige einer unerlaubten Verwendung der Hardware-Schlüsselvorrichtung (20) verlängert wird; und/oder
(b) die Zeitperiode bei Anzeige einer erlaubten Verwendung der Hardware-Schlüsselvorrichtung (20) verkürzt wird.

2. Verfahren nach Anspruch 1, wobei das Anzeigen der unerlaubten Verwendung der Software-Anwendung (30) die folgenden Schritte umfasst:
nach Aktivierung eines mit der Software-Anwendung (30) in Beziehung stehenden Vorgangs, Setzen oder Hinterlegen (302) eines Kennzeichens, welches die Ausführung des Vorgangs anzeigt;
nach Beendigung des Vorgangs, Löschen (303) des Kennzeichens;
nach erneuter Aktivierung des Vorgangs, falls das Kennzeichen gesetzt ist, Anzeigen, dass die Software-Anwendung (30) auf unerlaubte Art und Weise verwendet worden ist.

3. Verfahren nach Anspruch 2, wobei die Aktivierung des Vorgangs aus der Gruppe ausgewählt wird, welche besteht aus: Ausführung einer anderen Software-Anwendung (30) als die Software-Anwendung (30); Ausführung der Software-Anwendung (30); Ausführung eines Prozesses; Ausführung einer Aufgabe bzw. eines Auftrags; und Ausführung einer Funktion.

4. Verfahren nach Anspruch 2, wobei das Kennzeichen in einem nichtflüchtigen Speicher implementiert ist.

5. Verfahren nach Anspruch 1, wobei die Anzeige einer unerlaubten Verwendung der Software-Anwendung (30) die Anzeige einer unerwarteten Handlungsweise der Software-Anwendung (30) oder eine unerwartete Handlungsweise der Schlüsselvorrichtung (20) aufweist.

6. Verfahren nach Anspruch 1, wobei die Anzeige einer unerlaubten Verwendung der Software-Anwendung (30) die folgenden Schritte aufweist:
Messen (403) einer Zeitdauer der Ausführung eines Vorgangs durch die Software-Anwendung (30); und
Anzeigen einer unerlaubten Verwendung der Software-Anwendung (30), falls die Zeitdauer einen Schwellenwert übersteigt, der eine angemessene Zeitdauer für die Ausführung anzeigt.

7. Verfahren nach Anspruch 6, wobei die Ausführung des Vorgangs aus der Gruppe ausgewählt wird, welche besteht aus: Ausführung eines Prozesses; Ausführung einer Aufgabe bzw. eines Auftrags; und Ausführung einer Funktion.

8. Verfahren nach Anspruch 1, wobei die Blockierung oder Sperrung (306) der Schlüsselvorrichtung (20) aus der Gruppe ausgewählt wird, welche besteht aus: Deaktivieren zumindest einer gewissen Funktionalität der Vorrichtung; Löschen von Daten innerhalb der Schlüsselvorrichtung (20); und Verändern einer Handlungsweise der Schlüsselvorrichtung (20).

9. Verfahren nach Anspruch 1, wobei die Anzeige einer unerlaubten Verwendung der Software-Anwendung (30) die folgenden Schritte aufweist:
Erhalt einer Integritätsanzeige einer ursprünglichen Form eines oder mehrerer Bauteile der Software-Anwendung (30);
Erhalt einer Integritätsanzeige einer augenblicklichen Form des einen oder der mehreren Bauteile der Software-Anwendung (30); und
falls die Integritätsanzeige der ursprünglichen Form der Integritätsanzeige der augenblicklichen Form entspricht, anschließende Anzeige, dass der eine oder die mehreren Bauteile nicht manipuliert worden sind, ansonsten Anzeige, dass der eine oder die mehreren Bauteile manipuliert worden sind.

10. Verfahren nach Anspruch 1, welches des Weiteren den folgenden Schritt aufweist: im Anschluss an die Sperrung (306) der Schlüsselvorrichtung (20), Freigabe bzw. Entsperrung (204) der Schlüsselvorrichtung (20) aus der Ferne bzw. im Remote-Betrieb durch eine berechtigte Person.

11. Verfahren nach Anspruch 1, wobei die Zeitperiode bei Anzeige eines falschen Alarms verändert wird, und wobei die Änderung entweder die Verlängerung (206) der Zeitperiode oder die Verkürzung (207) der Zeitperiode einschließt.

12. Verfahren nach Anspruch 1, wobei die Anzeige einer unerlaubten Verwendung der Software-Anwendung (30) die folgenden Schritte aufweist:
nach dem Start eines ersten Prozesses, Aktivierung (601) eines zweiten Prozesses auf der Schlüsselvorrichtung (20), wobei der zweite Prozess die Schlüsselvorrichtung (20) nach Ablauf einer ausreichenden Zeitdauer (610) zur Beendigung des ersten Prozesses sperrt; und
bei Ende des ersten Prozesses vor Ablauf der ausreichenden Zeitdauer (610), Abbruch (603) des zweiten Prozesses, wodurch ein falscher Alarm der Anzeige einer unerlaubten Verwendung verhindert wird.

## Revendications

1. Procédé pour empêcher l'utilisation non autorisée d'une application logicielle (30) qui s'exécute sur un ordinateur (10) et qui est protégée par un dispositif à clé matérielle (20) ayant un facteur de forme d'un jeton, dans lequel le dispositif à clé (20) est externe à l'application logicielle (30) et externe à l'ordinateur (10), le procédé comprenant :
(a) pendant la durée d'exécution de l'application logicielle :
(i) la réception de chaînes chiffrées, en provenance de l'application logicielle (30), par le dispositif à clé matérielle (20) ayant le facteur de forme de jeton qui est externe à l'application logicielle (30) et est externe à l'ordinateur (10) ;
(ii) le déchiffrement des chaînes chiffrées reçues pour générer des données déchiffrées ;
(iii) le retour des données déchiffrées du dispositif à clé matérielle (20) à l'application logicielle (30) ;
(b) le test (201) de l'application logicielle (30) pour une utilisation non autorisée ; et
(c) si ledit test (201) trouve ladite utilisation non autorisée de l'application logicielle (30) :
(i) l'indication de ladite utilisation non autorisée de l'application logicielle (30) ; et
(ii) le fait d'empêcher l'utilisation de l'application logicielle (30) ;
**caractérisé en ce que** :
(i) ledit fait d'empêcher l'utilisation de l'application logicielle (30) se fait en bloquant (306) le dispositif à clé (20) de sorte que ledit déchiffrement ne soit pas effectué ;
(ii) le procédé comprend en outre :
(d) à la suite dudit blocage (306) du dispositif à clé (20), le déblocage automatique (204) du dispositif à clé (20) après qu'une période de temps prédéterminée est terminée,
dans lequel :
(A) la période de temps est augmentée suite à l'indication d'une utilisation non autorisée du dispositif à clé matérielle (20) ; et/ou
(B) la période de temps est diminuée suite à l'indication d'une utilisation autorisée du dispositif à clé matérielle (20).

2. Procédé selon la revendication 1, dans lequel ladite indication d'une utilisation non autorisée de l'application logicielle (30) comprend :
suite à l'invocation d'une opération liée à l'application logicielle (30), l'établissement (302) d'un drapeau indiquant l'exécution de ladite opération ;
suite à la terminaison de ladite opération, l'effacement (303) dudit drapeau ;
suite à la ré-invocation de ladite opération, si ledit drapeau est établi, l'indication selon laquelle l'application logicielle (30) a été utilisée d'une manière non autorisée.

3. Procédé selon la revendication 2, dans lequel ladite invocation de ladite opération est sélectionnée dans le groupe comprenant : l'exécution d'une application logicielle (30) autre que l'application logicielle (30) ; l'exécution de l'application logicielle (30) ; l'exécution d'un processus ; l'exécution d'une tâche ; et l'exécution d'une fonction.

4. Procédé selon la revendication 2, dans lequel ledit drapeau est mis en oeuvre dans une mémoire non volatile.

5. Procédé selon la revendication 1, dans lequel ladite indication d'une utilisation non autorisée de l'application logicielle (30) comprend l'indication d'un comportement inattendu de l'application logicielle (30) ou d'un comportement inattendu du dispositif à clé (20).

6. Procédé selon la revendication 1, dans lequel ladite indication d'une utilisation non autorisée de l'application logicielle (30) comprend :
la mesure (403) d'un temps d'exécution d'une opération par l'application logicielle (30) ; et
l'indication d'une utilisation non autorisée de l'application logicielle (30) si ledit temps dépasse un seuil indiquant un temps raisonnable pour ladite exécution.

7. Procédé selon la revendication 6, dans lequel ladite exécution de ladite opération est sélectionnée dans le groupe comprenant : l'exécution d'un processus, l'exécution d'une tâche ; et l'exécution d'une fonction.

8. Procédé selon la revendication 1, dans lequel ledit blocage (306) du dispositif à clé (20) est sélectionné dans le groupe comprenant : la désactivation d'au moins une fonctionnalité dudit dispositif ; l'effacement de données à l'intérieur du dispositif à clé (20) ; et la modification d'un comportement du dispositif à clé (20).

9. Procédé selon la revendication 1, dans lequel ladite indication d'une utilisation non autorisée de l'application logicielle (30) comprend :
l'obtention d'un indicateur d'intégrité d'une forme originale d'un ou plusieurs composants de l'application logicielle (30) ;
l'obtention d'un indicateur d'intégrité d'une forme actuelle desdits une ou plusieurs composants de l'application logicielle (30) ; et
si ledit indicateur d'intégrité de ladite forme originale correspond audit indicateur d'intégrité de ladite forme actuelle, indiquer alors que lesdits un ou plusieurs composants n'ont pas été trafiqués, sinon indiquer que lesdits un ou plusieurs composants ont été trafiqués.

10. Procédé selon la revendication 1, comprenant en outre: à la suite dudit blocage (306) du dispositif à clé (20), le déblocage à distance (204) du dispositif à clé (20) par une personne autorisée.

11. Procédé selon la revendication 1, dans lequel ladite période de temps est modifiée suite à l'indication d'une fausse alerte, et dans lequel ladite modification est une de l'augmentation (206) de ladite période de temps et de la diminution (207) de ladite période de temps.

12. Procédé selon la revendication 1, dans lequel ladite indication d'une utilisation non autorisée de l'application logicielle (30) comprend :
suite au démarrage d'un premier processus, l'activation (601) d'un second processus sur le dispositif à clé (20), où ledit second processus bloque le dispositif à clé (20) après qu'un temps suffisant (610) s'est écoulé pour que ledit premier processus se soit fini ; et
suite à la fin dudit premier processus avant que ledit temps suffisant (610) se soit écoulé, l'abandon (603) dudit second processus, empêchant ainsi de fausses alertes de ladite indication d'une utilisation non autorisée.
